# EUROPÄISCHE PATENTSCHRIFT

(11) **EP 1 769 674 B1**
(45) Veröffentlichungstag und Bekanntmachung des Hinweises auf die Patenterteilung: **07.01.2009**
(21) Anmeldenummer: 06118395.0
(22) Anmeldetag: 03.08.2006
(51) Int. Cl.: A01F 15/10

(54) **Landwirtschaftliche Kolbenpresse**
Agricultural pistion press
Press ä piston agricole

(30) Priorität: 28.09.2005 DE 102005046552
(43) Veröffentlichungstag der Anmeldung: 04.04.2007
(73) Patentinhaber: Usines CLAAS France S.A.S., 57148 Woippy Cedex (FR)
(72) Erfinder: Fuchs, Volker, 54329, Konz (DE); Schröder, Olaf, 27804, Berne (DE)
(74) Vertreter: Ellerbrächter, Dirk

(56) Entgegenhaltungen:
- EP-A1- 0 761 086
- EP-A1- 0 870 425
- DE-A1- 3 638 792
- DE-A1- 10 360 598

## Beschreibung

Die vorliegende Erfindung betrifft eine landwirtschaftliche Kolbenpresse gemäß dem Oberbegriff des Patentanspruchs 1.

Derartige Kolbenpressen sind unter anderem aus der DE 39 13 496 C2 bekannt geworden. Die als Rotationsförderer ausgeführte Zuführeinrichtung der Ballenpresse ist unter einem Ballenpresskanal angeordnet, wobei der Rotationsförderer von einem Kurbeltrieb des Presskolbens angetriebenen wird. Eine solche Koppelung bewirkt, dass das Erntegut synchron zur Presskolbenbewegung über kurvenbahngesteuerte Förderrechen durch einen Zuführkanal in den Ballenpresskanal befördert wird. Die Förderrechen sind in verschwenkbaren Kurvenbahnen gelagert, wobei an der Kurvenbahn von dem Kurbeltrieb aus angetriebene Koppelglieder derart angelenkt sind, dass die Zinkenspitzen der Förderrechen zum Befüllen des Zuführkanals eine entsprechende Anzahl von Förderkurven beschreiben. Die Position der Förderkurven ändert sich während des Befüllvorganges in der Weise, dass die Kurvenbahnen mit zunehmender Erntegutmenge im Zuführkanal entgegen der Förderrichtung des Erntegutes verschoben werden.

Als nachteilig bei dieser Ausführungsform hat sich erwiesen, dass die freiliegenden Kurvenbahnen extrem störanfällig gegen Verschmutzungen und Verschleiß sind und sowohl der Verschleiß als auch die Verschmutzungen erhebliche Auswirkungen auf die Form der von den Rafferzinken zu durchlaufenden Kurvenbahnen haben. Im Ergebnis kann dies zu einer erheblichen Abnahme der Vorderdichtungswirkung im Zuführkanal und zu Kollisionen der Rafferzinken mit im Wirkbereich der Rafferzinken liegenden Baugruppen der Ballenpresse führen.

Eine weitere Zuführeinrichtung einer Ballenpresse ist in der EP 0 761 086 B1 offenbart, die einen unter einem Presskanal angeordneten und von einem Kurbeltrieb eines Presskolbens aus angetriebenen Rotationsförderer aufweist, welcher die jeweiligen Erntegutportionen synchron zur Bewegung des Presskolbens mittels Förderrechen durch den Zuführkanal in den Ballenpresskanal befördert, wobei der Förderrechen mit dem Kurbeltrieb mittels eines Hydraulikzylinders derart verbunden ist, dass die Förderkurve des Förderrechens in Abhängigkeit von Betriebsparametern der Ballenpresse gesteuert wird. Während ein derartiges System eine weitgehend gleichmäßiger Vorverdichtung des Erntegutes im Zuführkanal ermöglicht, besteht aber auch hier das Problem, dass die verschiedenen Kurvenbahnsteuerungen starker Verschmutzung und hohem Verschleiß unterliegen. Zudem muss der Hubzylinder in extrem kurzen Zeitintervallen druckbeaufschlagt und druckentlastet werden, um die Umschaltung zwischen den verschiedenen Kurvenbahnen der Rafferzinken zu bewirken. Dies stellt extreme Forderungen an die Belastbarkeit des hydraulischen System und fordert zudem hohe Druckölströme und damit großvolumige und teure Pumpensysteme.

Der vorliegenden Erfindung liegt daher die Aufgabe zugrunde, eine Rafferzinkensteuerung vorzuschlagen, die die im Stand der Technik beschriebenen Nachteile vermeidet und insbesondere verschleiß- und verschmutzungsarm eine schnelle und präzise Umschaltung zwischen verschiedenen Kurvenbahnen der Rafferzinken sicherzustellen.

Erfindungsgemäß wird die Aufgabe durch eine Vorrichtung mit den kennzeichnenden Merkmalen des Anspruchs 1 gelöst.

Indem das zumindest eine teleskopierbare Getriebeglied die Bewegung der Rafferzinken bewirkt und zumindest dem Raffergetriebe eine Rückhaltevorrichtung zugeordnet ist, kann auf konstruktiv einfache Weise eine sichere Veränderung der Bewegungsbahn der Rafferzinken zum Umschalten von einem Vorhub auf einem Füllhub erreicht werden. Dadurch wird kostengünstig eine hohe Funktionssicherheit des Raffergetriebes und ein geringer Verschleiß der die Bewegung der Rafferzinken bewirkenden Bauteile gewährleistet.

Eine vorteilhafte Ausgestaltung der Erfindung ergibt sich dann, wenn die Rückhaltevorrichtung ein teleskopierbares Koppelglied umfasst, sodass die Steuerung des Raffergetriebes auf konstruktive einfache Weise von der Rückhaltevorrichtung kontrolliert und beeinflusst werden kann. Als vorteilhaft erweist sich die Ausbildung des teleskopierbaren Getriebegliedes des Raffergetriebes und des teleskopierbaren Koppelgliedes der Rückhaltevorrichtung als Hubzylinder, wodurch auf konstruktiv einfache Weise und kostengünstig eine steuerbare Teleskopfunktion zur Beeinflussung der Bewegungsbahn des Raffers erreicht werden kann.

Indem der Hubzylinder der Rückhaltevorrichtung mit dem Hubzylinder des Raffergetriebes über eine Steuer- und Regeleinrichtung in der Weise miteinander gekoppelt sind, dass die Bewegung der Rafferzinken von einem Füllhub in einen Vorhub umschaltbar ist, wird sichergestellt, dass die Hubumschaltung ausschließlich hydraulisch und damit verschleißarm ausgelöst wird.

In vorteilhafter Weiterbildung der Erfindung wird ein optimales Management zwischen den sogenannten Vorhüben und den Füllhüben der Rafferzinken dann erreicht, wenn während des Vorhubs der Rafferzinken der Hubzylinder der Rückhaltevorrichtung seine druckbeaufschlagte Strecklage einnimmt und die Druckräume des Hubzylinders des Raffergetriebes wechselweise druckbeaufschlagt werden und während des Füllhubs der Rafferzinken der Hubzylinder der Rückhaltevorrichtung ein Arbeitsspiel ausführt und der Hubzylinder des Raffergetriebes eine Endlagenposition einnimmt. Einerseits kann dadurch ein präziser Wechsel zwischen den verschieden Hubtypen der Rafferzinken erreicht werden. Zum anderen wird so eine einfache schaltungstechnische Koppelung der Hubzylinder möglich, ohne dass eine aufwendige mechanische Umlenkung des Raffergetriebes erfolgen muss.

Damit die Zahl der erforderlichen Schaltelemente klein gehalten werden kann, ist in einer weiteren vorteilhaften Ausgestaltung vorgesehen, dass der Hubzylinder des Raffergetriebes und/oder der Hubzylinder der Rückhaltevorrichtung zumindest während des jeweiligen Arbeitsspiels druckbeaufschlagt sind, vorzugsweise mit 25 bar vorgespannt sind.

In vorteilhafter Weiterbildung der Erfindung kann die Umschaltung zwischen Vor- und Füllhub in einem einfachen Fall dadurch bewirkt werden, dass der Hubzylinder des Raffergetriebes in einer Endlagenposition in Sperrstellung betrieben wird.

Eine konstruktiv einfach gestaltete und präzise arbeitende Ausführung des Raffergetriebes ergibt sich dann, wenn das teleskopierbare Getriebeglied des Raffergetriebes einen Endes über eine Raffersteuerkurbel mit der Kolbenkurbel des Presskolbens und anderen Endes über eine Kurbelschwinge mit einer Steuerwelle verbunden ist und der Kurbelschwinge die teleskopierbare Rückhaltevorrichtung zugeordnet ist und wobei die Steuerwelle einen Steuerhebel drehfest aufnimmt der die von einem Rafferhebel aufgenommenen Rafferzinken über eine Koppelstange an die Bewegung des teleskopierbaren Getriebegliedes des Raffergetriebes gekoppelt sind.

Zur effizienten Umschaltung zwischen den Hubarten der Rafferzinken ist in einer vorteilhaften Ausgestaltung vorgesehen, dass die jeweiligen Hubzylinder wechselweise verriegelbar sind. In einer konstruktiven einfachen Umsetzung wird die Verriegelung durch Betätigung eines Sperrventils und/oder durch Vorspannung der jeweiligen Hubzylinder mittels eines definierten Hydraulikdrucks bewirkt.

In einer weiteren vorteilhaften Ausgestaltung der Erfindung sind das teleskopierbare Getriebeglied und die Rückhaltevorrichtung abhängig von Betriebsparametern mittels einer Steuer- und Regeleinrichtung steuerbar, sodass die Bewegungsbahn der Rafferzinken in Abhängigkeit von in der Kolbenpresse erfassten Betriebsparametern veränderbar ist.

Indem die Drehzahlen der Rafferkurbel und der Raffersteuerkurbel identisch sind und ganzzahlige Vielfache der Drehzahl der Kolbenkurbel bilden wird erreicht, dass die Rafferzinken nur eine Art von Vor- oder Füllhüben ausführen können. Bilden hingegen die Drehzahlen der Rafferkurbel und der Raffersteuerkurbel zueinander und in Bezug auf die Drehzahl der Kolbenkurbel jeweils ganzzahlige Vielfache der Drehzahl der Kolbenkurbel, so kann erreicht werden, dass zumindest zwei Arten von Vorhüben von dem Rafferzinken abgearbeitet werden können.

In einer weiteren vorteilhaften Ausgestaltung der Erfindung erfolgt die Umschaltung zwischen Vor- und Füllhub sensorgesteuert, sodass der Fahrer des Schleppers entlastet und eine homogene Vorverdichtung des Erntegutes im Zuführkanal gewährleistet wird.

Indem wenigstens ein Sensor unterschiedliche Erntegutdichten im Zuführkanal sensiert und die Bewegung des in den Zuführkanal geförderten Ernteguts sperrt oder freigibt und Freigabe oder Sperrung durch Definition eines Schwellwertes in der Steuer- und Regeleinheit bestimmbar sind, wird eine an die Ernteguteigenschaften angepasste annähern gleichmäßige Vorderdichtung des Ernteguts innerhalb des Zuführkanals sichergestellt.

Eine konstruktiv einfache Ausführung des Sensors ergibt sich dann, wenn der Sensor in den Zuführkanal hineinragende Rückhalteelemente umfasst, die von einem druckbeaufschlagten Hubzylinder in dem Zuführkanal gehalten werden und wobei die den Verdichtungsgrad des Erntegutes in dem Zuführkanal definierende Vorspannung des Hubzylinder über einen Schwellwert vordefiniert werden kann.

Damit die Veränderung der Bewegungsbahn des Raffers effizient und kostengünstig erfolgen kann, ist der Hubzylinder des Raffergetriebes als Gleichlaufzylinder und der Hubzylinder der Rückhaltevorrichtung als Plungerzylinder ausgebildet, wobei die Haltekraft des Plungerzylinder so bemessen ist, dass der Raffer sicher in einer Endlagenposition gehalten werden kann und dadurch Vorhübe des Raffers sicher und unabhängig von der Beschaffenheit des Erntegutes ausführbar sind.

Eine einfache schaltungstechnische Realisierung der erfindungsgemäßen Vorrichtung ergibt sich dann, wenn der Hubzylinder des Raffergetriebes, der Hubzylinder der Rückhaltevorrichtung und der Hubzylinder der Rückhaltelemente in einen gemeinsamen Hydraulikkreislauf eingebunden sind und wobei zumindest dem Hubzylinder des Raffergetriebes ein Schaltventil zur Freigabe und Sperrung diese Hubzylinders zugeordnet ist und der Hydraulikkreislauf unter einer hydraulischen Vorspannung betrieben wird und dem Hubzylinder der Rückhalteelemente ein Steuerventil zur Änderung der Haltekraft dieses Hubzylinders zugeordnet ist und der Hydraulikkreislauf unter einer Vorspannung von, vorzugsweise 25 bar, betrieben wird.

Damit vermieden wird, dass die Rafferzinken auch dann auf einen Vor- oder Füllhub gezwungen werden, wenn Materialverstopfungen im Zuführkanal auftreten, ist in vorteilhafter Ausgestaltung der Erfindung dem teleskopierbaren Getriebeglied des Raffergetriebes ein Druckbegrenzungsventil als Überlastsicherung zugeordnet ist.

Weitere vorteilhafte Ausgestaltungen sind Gegenstand weiterer Unteransprüche und werden nachfolgend anhand von Zeichnungen näher erläutert. Es zeigen
- Figur 1: eine landwirtschaftliche Kolbenpresse in schematischer Seitenansicht
- Figur 2: eine Detail der Kolbenpresse nach Figur 1 mit Steuer- und Regeleinrichtung
- Figur 3: ein Detail der Kolbenpresse nach Figur 1 mit Rafferzinkenposition im Vorhub
- Figur 4: ein Detail der Kolbenpresse nach Figur 1 mit Rafferzinkenposition im Füllhub

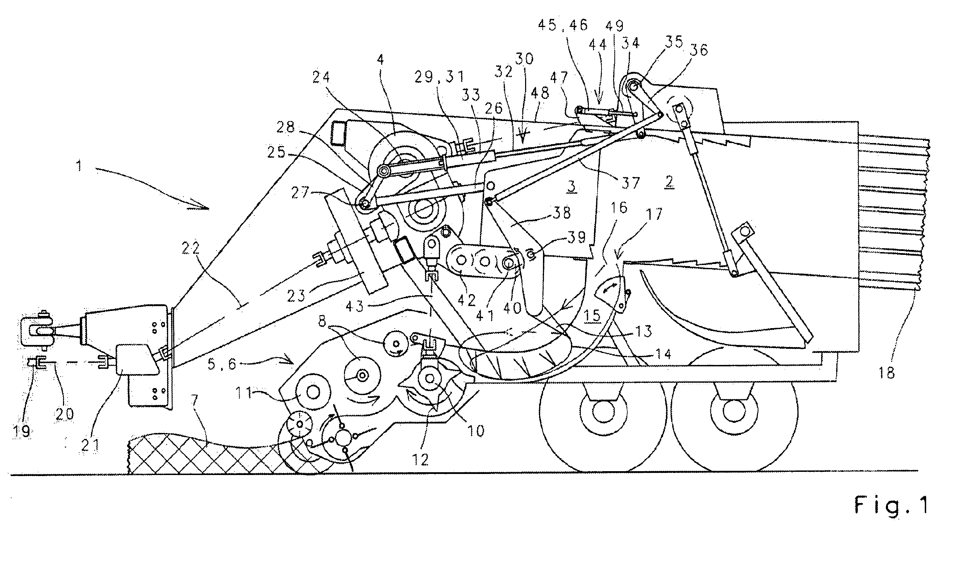

In Figur 1 ist eine landwirtschaftliche Kolbenpresse 1 zu sehen, die eine Ballenpresskammer 2 mit einem darin hin und her beweglichen Presskolben 3 aufweist. Unterhalb des Hauptgetriebes 4 ist eine Aufnahmevorrichtung 5 in Form einer Pickup 6 angeordnet, die das Erntegut 7 vom Boden aufnimmt und durch seitliche Förderschnecken 8 mittig zusammengeführt der Schneidvorrichtung 10 zuführt. Zur Unterstützung der Erntegutzusammenführung ist eine in Gutflussrichtung rotierende Niederhaltertrommel 11 oberhalb der Aufnahmevorrichtung 5 angeordnet. Im rückwärtigen Bereich der Schneidvorrichtung 10 übergeben deren Mitnehmer 12 das zerkleinerte Erntegut 7 an Rafferzinken 13. Die Rafferzinken 13 haben die Aufgabe, das zerkleinerte Erntegut 7 in noch näher zu beschreibender Weise durch Vorhübe 14 im Zuführkanal 15 vorzuverdichten und mit einem Füllhub 16, wenn der Presskolben 3 im Laufe seiner zyklischen Bewegungen die Öffnung 17 zur Ballenpresskammer 2 freigibt, an die Ballenpresskammer 2 der landwirtschaftlichen Kolbenpresse 1 zu übergeben. In der Ballenpresskammer 2 der landwirtschaftlichen Kolbenpresse 1 wird das Erntegut 7 durch Hubbewegungen des Presskolbens 3 gegen das zuvor gepresste Erntegut 7 gedrückt, dabei verdichtet und schließlich mit dem zuvor gepressten Erntegut 7 in Richtung des Abgabeendes 18 der landwirtschaftlichen Kolbenpresse 1 geschoben.

In an sich bekannter Weise wird die Kolbenpresse 1 fronseitig über eine mit dem Zapfwellenanschluss 19 eines nicht dargestellten Schleppers gekoppelte Gelenkwelle 20 mit Antriebsenergie versorgt. Im dargestellten Ausführungsbeispiel wird die Antriebsenergie über einen Winkeltrieb 21 und eine weitere Gelenkwelle 22 an das mit dem Hauptgetriebe 4 gekoppelte Schwungrad 23 übertragen. Eine erste Ausgangswelle 24 des Hauptgetriebes 4 nimmt drehfest wenigstens eine Kolbenkurbel 25 auf, die über eine Pleuelstange 26 gelenkig mit dem Presskolben 3 verbunden ist. Im einfachsten Fall wird die gelenkige Verbindung zwischen der Kolbenkurbel 25 und der Pleuelstange 26 durch einen beide Elemente durchsetzenden Wellenstupf 27 realisiert. Zugleich nimmt der Wellenstumpf 27 eine Raffersteuerkurbel 28 drehfest auf die anderenends gelenkig mit einem noch näher zu beschreibenden teleskopierbaren Getriebeglied 29 eines Raffergetriebes 30 verbunden ist. Im dargestellten Ausführungsbeispiel ist das teleskopierbare Getriebeglied 29 als Hubzylinder 31 ausgebildet, dessen Kolbenstange 32 nach Art eines Gleichlaufzylinders beidseitig aus dem Zylinderrohr 33 des Hubzylinders 31 herausragt und die Raffersteuerkurbel 28 mit einer gestellfest gelagerten Kurbelschwinge 34 gelenkig verbindet. Die Kurbelschwinge 34 wird von einer Steuerwelle 35 durchsetzt, die mit einem Steuerhebel 36 drehfest verbunden ist. Der Steuerhebel 36 nimmt an seinem freien Ende eine Koppelstange 37 gelenkig auf, die anderenends schwenkbeweglich an dem Rafferhebel 38 angreift. Der bogenförmig gestaltete Rafferhebel 38 nimmt an dem zuführkanalseitigen Ende die bereits beschriebenen Rafferzinken 13 drehfest auf. In einem etwa mittigen Bereich wird der Rafferhebel 38 von einer Achse 39 durchsetzt, welche von einer Rafferkurbel 40 umgriffen wird. Die Rafferkurbel 40 sitzt auf der Abtriebswelle 41 eines von dem Hauptgetriebe 4 angetriebenen Stirnradgetriebes 42, sodass die Drehbewegung der Rafferkurbel 40 eine Bewegung der Rafferzinken 13 in dem Zuführkanal 15 auf definierten Kurvenbahnen 14, 16 bewirkt. In an sich bekannter Weise wird über eine weitere Gelenkwelle 43 von dem Stirnradgetriebe 42 oder unmittelbar von dem Hauptgetriebe 4 Energie zum Antreiben der Schneidvorrichtung 10 sowie der gesamten Aufnahmevorrichtung 5 abgegriffen.

Erfindungsgemäß ist dem Raffergetriebe 30 in einem obenseitigen Bereich eine Rückhaltevorrichtung 44 zugeordnet. Die Rückhaltevorrichtung 44 weist ein teleskopierbares Koppelglied 45 auf, welches im dargestellten Ausführungsbeispiel als Hubzylinder 46 ausgebildet ist. Besagter Hubzylinder 46 wird einenends schwenkbeweglich von einem im Maschinenrahmen 48 fixierten Halteflansch 47 aufgenommen. Der als sogenannter Plungerzylinder ausgeführte Hubzylinder 46 greift mit seiner Kolbenstange 49 ebenfalls gelenkig an der bereits die Kolbenstange 32 des ersten Hubzylinders 31 aufnehmenden Kurbelschwinge 34 an.

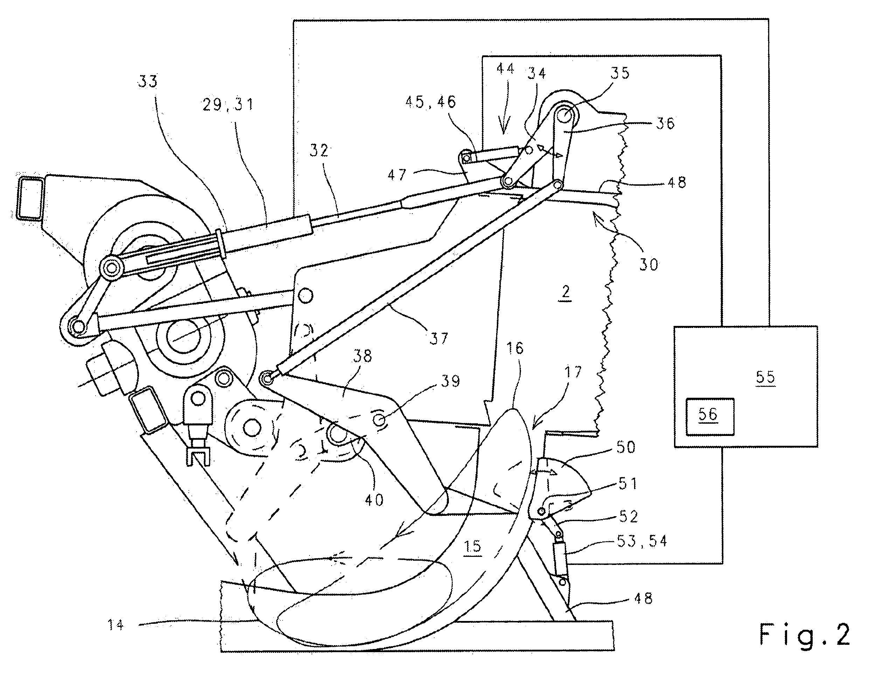

Wie bereits erwähnt, sollen die Rafferzinken 13 in Abhängigkeit von dem Befüllzustand des Zuführkanals 15 sogenannte Vorhübe 14 sowie Füllhübe 16 ausführen. Hierfür ist es zunächst erforderlich den Befüllzustand des Zuführkanals 15 zu ermitteln. Gemäß Fig. 2 wird der Zuführkanal 15 an seinem obenseitigen, der Ballenpresskammer 2 zugeordneten Öffnung 17 von sogenannten Rückhalteelementen 50 durchsetzt, die drehfest auf einer außerhalb des Zuführkanals 15 im Maschinenrahmen 48 gelagerten verschwenkbaren Schaltwelle 51 angeordnet sind. Die Schaltwelle 51 nimmt einenends drehfest einen Verstellhebel 52 auf, der über einen ebenfalls im Maschinenrahmen 48 gelagerten als Plungerzylinder 53 ausgeführten Hubzylinder 54 verschwenkbar ist. In noch näher zu beschreibender Weise sind die verschiedenen Hubzylinder 31, 46, 54 über eine in Fig. 2 nur symbolisch angedeutete Steuer- und Regeleinrichtung 55 in der Weise miteinander gekoppelt, dass zunächst die Rückhaltelemente 50 solange den Zugang zur Ballenpresskammer 2 blockieren, solange der Zuführkanal 15 keinen hinreichenden Befüllgrad erlangt hat. Während dieser Befüllperiode führen die Rafferzinken 13 innerhalb des Zuführkanals 15 eine beliebige Anzahl von Vorhüben 14 aus. Hat der Zuführkanal 15 einen ausreichenden Befüllgrad erreicht geben die Rückhalteelemente 50 den Zuführkanal 15 frei und zugleich durchlaufen die Rafferzinken 13 einen Füllhub 16, der das in dem Zuführkanal 15 befindliche Erntegut 7 in die Ballenpresskammer 2 fördert.

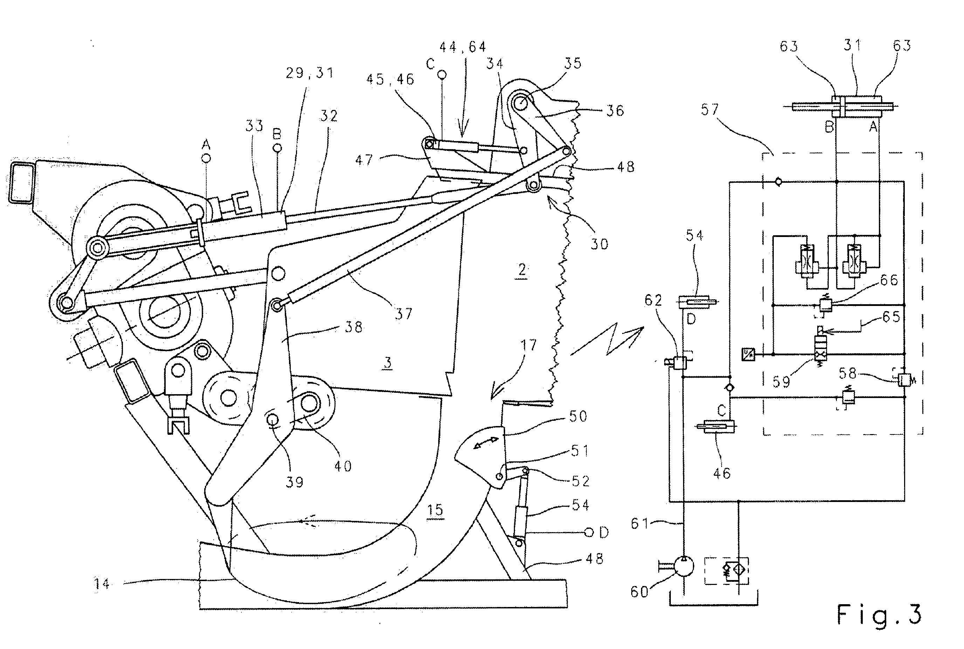

In dem dargestellten Ausführungsbeispiel wird dieser Vorgang zunächst dadurch bewirkt, dass die von dem die Schaltwelle 51 führenden Hubzylinder 54 aufgebrachte Haltekraft in der Steuer- und Regeleinrichtung 55 durch Definition eines Schwellwertes 56 vorwählbar ist. Im einfachsten Fall kann dies durch Definition einer hydraulischen Vorspannung des Hubzylinders 54 bewirkt werden. Wird durch wiederkehrendes Durchlaufen der Vorhübe 14 ein Befüllgrad in dem Zuführkanal 15 erreicht, dessen auf die Rückhalteelemente 50 wirkenden Reaktionskräfte größer als die über den Schwellwert 56 in der Steuer- und Regeleinrichtung 55 voreingestellte Haltekraft sind, schwenken die Rückhalteelemente 50 aus dem Zuführkanal 15 heraus. Zugleich wird in der Steuer- und Regeleinrichtung 55 ein Schaltsignal generiert, welches ein Umschalten der Bewegung der Rafferzinken 13 von einem Vorhub 14 in den Füllhub 16 bewirkt. Diese Umschaltung wird nachfolgend an Hand Fig. 3 näher erläutert.

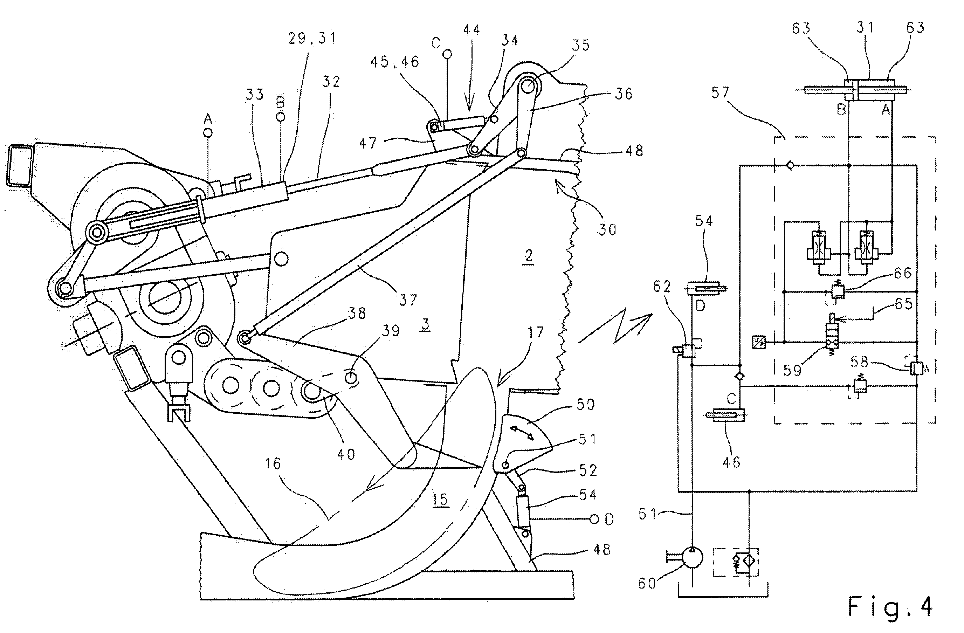

Die Fig. 3 und 4 zeigen die schaltungstechnische Koppelung der die Bewegung der Rafferzinken 13 sowie der Rückhalteelemente 50 bewirkenden Hubzylinder 31, 46, 54 sowie die Bewegungsabläufe des Raffergetriebes 30 im Vorhub 14 (Fig. 3) und im Füllhub 16 (Fig.4). Der das teleskopierbare Getriebeglied 29 des Raffergetriebes 30 bildende Hubzylinder 31 ist schaltungstechnisch mit einem sogenannten vorgesteuerten Schaltventil 57 gekoppelt, welches zumindest ein erstes Druckbegrenzungsventil 58 umfasst, sodass der als Gleichlaufzylinder ausgeführte erste Hubzylinder 31 unter einer Vorspannung, vorzugsweise 25 bar, betrieben wird. Zudem umfasst das Schaltventil 57 ein Sperrventil 59, sodass besagter Hubzylinder 31 im Arbeitsspiel wechselweise druckbeaufschlagt oder in einer Endlagenposition gesperrt werden kann. In den von einer gemeinsamen Speisepumpe 60 druckbeaufschlagten Hydraulikkreislauf 61 ist zugleich der als Plungerzylinder ausgeführte Hubzylinder 46 der Rückhaltevorrichtung 44 integriert und wird permanent mit dem Systemdruck druckbeaufschlagt. In dem dargestellten Ausführungsbeispiel gilt dies auch für den die Rückhaltelemente 50 führenden Hubzylinder 54. In einer solchen, vereinfachten Ausführung hängt die von diesem Hubzylinder 54 generierbare Haltekraft von dem Systemdruck des Hydraulikkreislaufs 61 ab. Damit der Schwellwert 56 der Haltekraft einstellbar ist kann dem Hubzylinder 54 ein elektrisches Steuerventil 62 zugeordnet sein, über welches die Vorspannung des Plungerzylinders 54 und damit die Haltekraft einstellbar ist. Es liegt im Rahmen der Erfindung, dass die Rückhaltevorrichtung 44 auch abschaltbar ist. In diesem Fall sind die Rückhalteelemente 50 aus dem Zuführkanal 15 herausgeschwenkt und die Hubzylinder 31, 46 des Raffergetriebes 30 und der Rückhaltevorrichtung 44 sind über den Hydraulikkreislauf 61 so miteinander gekoppelt, dass die Rafferzinken 13 alternierend einen Vorhub 14 und einen Füllhub 16 ausführen. In diesem Fall wird ohne Berücksichtigung des Verdichtungsgrades des Erntegutes 7 in dem Zuführkanal 15 die Förderung des Erntegutes 7 in die Ballenpresskammer 2 bewirkt.

Während der Befüllung des Zuführkanals 15 führen die Rafferzinken 13, bedingt durch die spezielle Stellung des Raffergetriebes 30 sogenannte Vorhübe 14 aus. Dabei werden im sogenannten Arbeitsspiel die Druckkammern 63 des Gleichlaufzylinders 31 wechselweise druckbeaufschlagt, sodass die Kolbenstange 32 des Gleichlaufzylinders 31 die Drehbewegung der Raffersteuerkurbel 28 über die hin- und herbewegte Kurbelschwinge 34, den mit dieser drehfest verbundenen Steuerhebel 36 und die Koppelstange auf den Rafferhebel 38 und damit die Rafferzinken 13 übertragen will. Da das Raffergetriebe 30 aber über seine Dimensionierung nur die Form der Vor- und Füllhübe 14, 16 bestimmen soll, ist der Kurbelschwinge 34 in erfindungsgemäßer Weise der gestellfeste Hubzylinder 46 der Rückhaltevorrichtung 50 zugeordnet. Die Vorspannung des Hubzylinders 46 ist dabei so bemessen, dass er sich in Strecklage 64 befindet und eine Schwingbewegung der Kurbelschwinge 34 verhindert, wenn die Rafferzinken 13 Vorhübe 14 ausführen sollen. Erreichen die auf die den Zuführkanal 15 durchsetzenden Rückhalteelemente 50 wirkenden Druckkräfte des verdichteten Erntegutes 7 einen Wert der über dem durch den Schwellwert 56 definierten Betrag der Haltekraft liegt, generiert die Steuer- und Regeleinheit 55 ein Schaltsignal 65 welches das dem Gleichlaufzylinder 31 zugeordnete Sperrventil 59 in Sperrstellung schaltet. Das Umschalten in Sperrstellung ist dabei so auf die Bewegung des Gleichlaufzylinders 31 abgestimmt, dass dessen Sperrung stets in einer Position erfolgt, in der die Kolbenstange 32 jeweils eine eingeschobene Endlagenposition einnimmt. Im Moment des Umschaltens in Sperrstellung wird die Drehbewegung der Raffersteuerkurbel 28 auf die Kurbelschwinge 34 übertragen. Dabei wird die Haltekraft des Plungerzylinders 46 der Rückhaltevorrichtung 44 überwunden, sodass der Plungerzylinder 46 ein Arbeitsspiel und die Kurbelschwinge 34 einen Schwingzyklus durchlaufen die eine Verstellung des Raffergetriebes 30 bewirken. Die Verstellung des Raffergetriebes 30 führt dazu, dass die Rafferzinken 13 nunmehr einen Füllhub 16 ausführen. Ist der Füllhub 16 absolviert, schwenken die Rückhalteelemente 50 wegen des nun fehlenden Gutwiderstandes zurück in den Zuführkanal 15. Dabei generiert die Steuer- und Regeleinrichtung 55 wiederum ein Schaltsignal 65 welches das Sperrventil 59 wieder in Durchlassstellung schaltet, sodass der Gleichlaufzylinder 31 wieder entsperrt und zur Ausführung von Vorhüben 14 wechselseitig druckbeaufschlagt wird. Auf diese Weise wird eine Schaltanordnung erreicht, bei der das Raffergetriebe 30 in zwei unterschiedliche Lagen verschwenkt werden kann, die dazu führen, dass die Rafferzinken 13 entweder Vorhübe 14 oder Füllhübe 16 ausführen, wobei jeweils nur ein Füllhub 16 ausgeführt wird während sich die Anzahl der Vorhübe 14 nach dem voreinstellbaren Schwellwert 56 der Haltekraft der Rückhalteelemente 50 richtet.

Eine schaltungstechnisch besonders einfache Ausführung ergibt sich dann, wenn die verschiedenen Hubzylinder 31, 46, 54 mit einem definierten Hydraulikdruck, vorzugsweise 25 bar, vorgespannt werden. Dies stellt einerseits sicher, dass die im System erforderlichen Haltekräfte ohne zusätzliche Ventilanordnungen realisierbar sind. Zum anderen bedarf es keiner Umschaltmittel für die in den Hydraulikkreislauf 61 integrierten Plungerzylinder 46, 54, da die auf diese Zylinder 46, 54 wirkenden äußeren Reaktionskräfte jeweils so hoch sind, dass die vorspannungsbedingten Zylinderkräfte überwunden werden.

Um bei Verstopfungen im Zuführkanal 15 zu vermeiden, dass Beschädigungen an dem Raffergetriebe 30 oder den mit dem Raffergetriebe 30 zusammenarbeitenden Organen wie etwa den Rafferzinken 13 oder dem Hauptgetriebe 4 auftreten, ist dem Gleichlaufzylinder 31 zudem ein Druckbegrenzungsventil 66 zugeordnet, welches bei Druckanstieg in dem Hydraulikmedium über einen einstellbaren Schwellwert ein Abblasen des Fluids zum Tank bewirkt. Zugleich ändert sich die Kurvenbahn der Rafferzinken 13 in der Weise, dass sich die Kurvenbahn verkürzt und die Rafferzinken 13 der Verstopfung ausweichen.

Damit sichergestellt ist, dass die Rafferzinken 13 nur in zwei Hubarten, nämlich dem Vorhub 14 und dem Füllhub 16 betreibbar sind, sind die verschiedenen Antriebe der Kolbenpresse so aufeinander abgestimmt, dass die Drehzahlen der Rafferkurbel 40 und der Raffersteuerkurbel 28 identisch und ganzzahlige Vielfache der Drehzahl der Kolbenkurbel 25 sind. Sofern in dem Arbeitsspiel der Rafferhübe zwischen den Vorhüben 14 und dem Füllhub 16 ein Zwischenhub vorgesehen sein soll liegt es im Rahmen der Erfindung, diesen Zwischenhub dadurch zu realisieren, dass die Drehzahlen der Rafferkurbel 40 und der Raffersteuerkurbel 28 zueinander und in Bezug auf die Drehzahl der Kolbenkurbel 25 jeweils ganzzahlige Vielfache der Kolbenkurbeldrehzahl bilden. In diesem Zusammenhang kann es für den Fall des Stromausfalls nach einer Sicherheitsschaltung vorgesehen sein, die verschiedenen Schaltelemente des Hydraulikkreislaufs 61 so auszulegen, dass sie bei Stromausfall Positionen einnehmen, in der die Rafferzinken 13 alternierend einen Vorhub 14 und eine Füllhub 16 ausführen.

Bezugszeichenliste:
- 1: landwirtschaftliche Kolbenpresse
- 2: Ballenpresskammer
- 3: Presskolben
- 4: Hauptgetriebe
- 5: Aufnahmevorrichtung
- 6: Pickup
- 7: Erntegut
- 8: Förderschnecke
- 9:
- 10: Schneidvorrichtung
- 11: Niederhaltertrommel
- 12: Mitnehmer
- 13: Rafferzinken
- 14: Vorhub
- 15: Zuführkanal
- 16: Füllhub
- 17: Öffnung
- 18: Abgabeende
- 19: Zapfwellenanschluss
- 20: Gelenkwelle
- 21: Winkeltrieb
- 22: Gelenkwelle
- 23: Schwungrad
- 24: Ausgangswelle
- 25: Kolbenkurbel
- 26: Pleuelstange
- 27: Wellenstumpf
- 28: Raffersteuerkurbel
- 29: teleskopierbares Getriebeglied
- 30: Raffergetriebe
- 31: Hubzylinder
- 32: Kolbenstange
- 33: Zylinderrohr
- 34: Kurbelschwinge
- 35: Steuerwelle
- 36: Steuerhebel
- 37: Koppelstange
- 38: Rafferhebel
- 39: Achse
- 40: Rafferkurbel
- 41: Abtriebswelle
- 42: Stirnradgetriebe
- 43: Gelenkwelle
- 44: Rückhaltevorrichtung
- 45: teleskopierbares Koppelglied
- 46: Hubzylinder
- 47: Halteflansch
- 48: Maschinenrahmen
- 49: Kolbenstange
- 50: Rückhaltelement
- 51: Schaltwelle
- 52: Verstellhebel
- 53: Plungerzylinder
- 54: Hubzylinder
- 55: Steuer- und Regeleinrichtung
- 56: Schwellwert
- 57: Schaltventil
- 58: Druckbegrenzungsventil
- 59: Sperrventil
- 60: Speisepumpe
- 61: Hydraulikkreislauf
- 62: Steuerventil
- 63: Druckkammer
- 64: Strecklage
- 65: Schaltsignal
- 66: Druckbegrenzungsventil

## Patentansprüche

1. Landwirtschaftliche Kolbenpresse mit einem von einem Kurbeltrieb angetriebenen oszillierenden Presskolben in einem Presskanal, einem Zuführkanal mit kurbelarmgesteuerten Rafferzinken, einem sich zwischen Kurbeltrieb und Rafferzinken befindenden Raffergetriebe mit zumindest einem teleskopierbaren Getriebeglied,
**dadurch gekennzeichnet, dass** zur sicheren Veränderung der Bewegungsbahn der Rafferzinken (13) zum Umschalten von einem Vorhub 14 auf einem Füllhub (16)
das zumindest eine teleskopierbare Getriebeglied (29) die Bewegung der Rafferzinken (13) bewirkt und wobei zumindest dem Raffergetriebe (30) eine Rückhaltevorrichtung (44) zugeordnet ist.

2. Landwirtschaftliche Kolbenpresse nach Anspruch 1,
**dadurch gekennzeichnet,**
**dass** die Rückhaltevorrichtung (44) zumindest ein teleskopierbares Koppelglied (45) aufweist.

3. Landwirtschaftliche Kolbenpresse nach Anspruch 1 oder 2,
**dadurch gekennzeichnet,**
**dass** das teleskopierbare Koppelglied (45) der Rückhaltevorrichtung (44) und das teleskopierbare Getriebeglied (29) des Raffergetriebes (30) als Hubzylinder (31, 46) ausgeführt sind.

4. Landwirtschaftliche Kolbenpresse nach einem der vorhergehenden Ansprüche,
**dadurch gekennzeichnet,**
**dass** der Hubzylinder (46) der Rückhaltevorrichtung (44) mit dem Hubzylinder (31) des Raffergetriebes (30) über eine Steuer- und Regeleinrichtung (55) in der Weise miteinander gekoppelt sind, dass die Bewegung der Rafferzinken (13) von einem Füllhub (16) in einen Vorhub (14) umschaltbar ist.

5. Landwirtschaftliche Kolbenpresse nach einem der vorhergehenden Ansprüche,
**dadurch gekennzeichnet,**
**dass** während des Vorhubs (14) der Rafferzinken der Hubzylinder (46) der Rückhaltevorrichtung (44) seine druckbeaufschlagte Strecklage (64) einnimmt und die Druckräume (63) des Hubzylinders (31) des Raffergetriebes (30) wechselweise druckbeaufschlagt werden.

6. Landwirtschaftliche Kolbenpresse nach einem der vorhergehenden Ansprüche,
**dadurch gekennzeichnet,**
**dass** während des Füllhubs (16) der Rafferzinken (13) der Hubzylinder (46) der Rückhaltevorrichtung (44) ein Arbeitsspiel ausführt und der Hubzylinder (31) des Raffergetriebes (30) eine Endlagenposition einnimmt.

7. Landwirtschaftliche Kolbenpresse nach einem der vorhergehenden Ansprüche,
**dadurch gekennzeichnet,**
**dass** der Hubzylinder (31) des Raffergetriebes (30) und/oder der Hubzylinder (46) der Rückhaltevorrichtung (44) zumindest während des jeweiligen Arbeitsspiels druckbeaufschlagt sind, vorzugsweise mit 25 bar vorgespannt sind.

8. Landwirtschaftliche Kolbenpresse nach einem der vorhergehenden Ansprüche,
**dadurch gekennzeichnet,**
**dass** zumindest der Hubzylinder (31) des Raffergetriebes (30) in der Endlagenposition in einer Sperrstellung betrieben wird.

9. Landwirtschaftliche Kolbenpresse nach einem der vorhergehenden Ansprüche,
**dadurch gekennzeichnet,**
**dass** das teleskopierbare Getriebeglied (29) des Raffergetriebes (30) einen Endes über eine Raffersteuerkurbel (28) mit der Kolbenkurbel (25) des Presskolbens (3) und anderen Endes über eine Kurbelschwinge (34) mit einer Steuerwelle (35) verbunden ist und der Kurbelschwinge (34) die teleskopierbare Rückhaltevorrichtung (44) zugeordnet ist und wobei die Steuerwelle (35) einen Steuerhebel (36) drehfest aufnimmt der die von einem Rafferhebel (38) aufgenommenen Rafferzinken (13) über eine Koppelstange (37) an die Bewegung des teleskopierbaren Getriebegliedes (29) des Raffergetriebes (30) koppelt.

10. Landwirtschaftliche Kolbenpresse nach einem der vorhergehenden Ansprüche,
**dadurch gekennzeichnet,**
**dass** das zumindest eine teleskopierbare Getriebeglied (29) des Raffergetriebes (30) und die wenigstens eine teleskopierbare Rückhaltevorrichtung (44) verriegelbar sind.

11. Landwirtschaftliche Kolbenpresse nach Anspruch 10,
**dadurch gekennzeichnet,**
**dass** die Verriegelung durch Betätigung eines Sperrventils (59) und/oder durch Vorspannung der das teleskopierbare Getriebeglied (29) des Raffergetriebes (30) und das teleskopierbare Koppelglied (45) der Rückhaltevorrichtung (44) bildenden Hubzylinder (31, 46) mittels eines definierten Hydraulikdrucks erfolgt.

12. Landwirtschaftliche Kolbenpresse nach einem der vorhergehenden Ansprüche,
**dadurch gekennzeichnet,**
**dass** der wenigstens eine Hubzylinder (31) des Raffergetriebes (30) und der wenigstens eine Hubzylinder (46) der Rückhaltevorrichtung (44) abhängig von Betriebsparametern mittels einer Steuer- und Regeleinrichtung (55) steuerbar sind.

13. Landwirtschaftliche Kolbenpresse nach einem der vorhergehenden Ansprüche,
**dadurch gekennzeichnet,**
**dass** die Drehzahlen der Rafferkurbel (40) und der Raffersteuerkurbel (28) identisch sind und ganzzahlige Vielfache der Drehzahl der Kolbenkurbel (25) bilden.

14. Landwirtschaftliche Kolbenpresse nach einem der Ansprüche 1 - 12,
**dadurch gekennzeichnet,**
**dass** die Drehzahlen der Rafferkurbel (40) und der Raffersteuerkurbel (28) zueinander und in Bezug auf die Drehzahl der Kolbenkurbel (25) jeweils ganzzahlige Vielfache der Drehzahl der Kolbenkurbel (25) bilden.

15. Landwirtschaftliche Kolbenpresse nach einem der vorhergehenden Ansprüche,
**dadurch gekennzeichnet,**
**dass** die Umschaltung zwischen Vorhub (14) und Füllhub (16) sensorgesteuert erfolgt, wobei zur Erfassung der Erntegutdichte ein Sensor (50-54) über die Breite des Zuführkanals (15) angeordnet ist.

16. Landwirtschaftliche Kolbenpresse nach einem der vorhergehenden Ansprüche,
**dadurch gekennzeichnet,**
**dass** der Sensor (50-54) unterschiedliche Erntegutdichten im Zuführkanal (15) sensiert und die Bewegung des in den Zuführkanal (15) geförderten Ernteguts (7) zur Ballenpresskammer (2) freigibt oder sperrt und wobei die Freigabe oder Sperrung durch Definition eines Schwellwertes (56) in der Steuer- und Regeleinrichtung (55) wählbar ist.

17. Landwirtschaftliche Kolbenpresse nach einem der vorhergehenden Ansprüche,
**dadurch gekennzeichnet,**
**dass** der Sensor (50-54) in den Zuführkanal (15) hineinragende Rückhalteelemente (50) umfasst, die von einem druckbeaufschlagten Hubzylinder (54) in dem Zuführkanal (15) gehalten werden und wobei die den Verdichtungsgrad des Erntegutes (7) in dem Zuführkanal (15) definierende Vorspannung des Hubzylinder (54) über den Schwellwert (51) vordefiniert werden kann.

18. Landwirtschaftliche Kolbenpresse nach einem der vorhergehenden Ansprüche,
**dadurch gekennzeichnet,**
**dass** der Hubzylinder (31) des Raffergetriebes (30) als Gleichlaufzylinder und die Hubzylinder (46, 54) der Rückhaltevorrichtung (44) und der Rückhalteelemente (50) als Plungerzylinder ausgebildet sind.

19. Landwirtschaftliche Kobenpresse nach einem der vorhergehenden Ansprüche,
**dadurch gekennzeichnet**,
das die Haltekraft des Plungerzylinders (46) der Rückhaltevorrichtung (44) so bemessen ist, dass sie die Kurbelschwinge (34) des Raffergetriebes (30) sicher in einer Endlagenposition hält.

20. Landwirtschaftliche Kolbenpresse nach wenigstens einem der vorhergehenden Ansprüche,
**dadurch gekennzeichnet,**
**dass** der Hubzylinder (31) des Raffergetriebes (30), der Hubzylinder (46) der Rückhaltevorrichtung (44) und der Hubzylinder (54) der Rückhaltelemente (55) in einen gemeinsamen Hydraulikkreislauf (61) eingebunden sind und wobei zumindest dem Hubzylinder (31) des Raffergetriebes (30) ein Schaltventil (57) zur Freigabe und Sperrung diese Hubzylinders (31) zugeordnet ist und der Hydraulikkreislauf (61) unter einer hydraulischen Vorspannung betrieben wird und dem Hubzylinder (54) der Rückhalteelemente (50) ein Steuerventil (62) zur Änderung der Haltekraft dieses Hubzylinders (54) zugeordnet ist.

21. Landwirtschaftliche Kolbenpresse nach Anspruch 20,
**dadurch gekennzeichnet,**
**dass** die hydraulische Vorspannung 25 bar beträgt.

22. Landwirtschaftliche Kolbenpresse nach einem der vorhergehenden Ansprüche,
**dadurch gekennzeichnet,**
**dass** zumindest dem teleskopierbaren Getriebeglied (29) des Raffergetriebes (30) ein Druckbegrenzungsventil (66) als Überlastsicherung zugeordnet ist.

23. Landwirtschaftliche Kolbenpresse nach einem der vorhergehenden Ansprüche,
**dadurch gekennzeichnet,**
**dass** der Hubzylinder (54) der Schaltwelle (51) abschaltbar ist und wobei die Rückhalteelemente (50) aus dem Zuführkanal (15) herausgeführt sind und die Rafferzinken (13) alternierend eine Vorhub (14) und einen Füllhub (16) ausführen.

## Claims

1. An agricultural piston press comprising an oscillating pressing piston driven by a crank drive in a pressing passage, a feed passage with crank arm-controlled gathering tines, and a gathering transmission between the crank drive and the gathering tines and having at least one telescopic transmission member,
**characterised in that** for reliably altering the path of movement of the gathering tines (13) for switching over from a pre-stroke (14) to a filling stroke (16) at least one telescopic transmission member (29) produces the movement of the gathering tines (13) and wherein a retaining device (44) is associated at least with the gathering transmission (30).

2. An agricultural piston press according to claim 1 **characterised in that** the retaining device (44) has at least one telescopic coupling member (45).

3. An agricultural piston press according to claim 1 or claim 2 **characterised in that** the telescopic coupling member (45) of the retaining device (44) and the telescopic transmission member (29) of the gathering transmission (30) are in the form of stroke cylinders (31, 46).

4. An agricultural piston press according to one of the preceding claims **characterised in that** the stroke cylinder (46) of the retaining device (44) is coupled together with the stroke cylinder (31) of the gathering transmission (30) by way of a control and regulating device (55) in such a way that the movement of the gathering tines (13) can be switched over from a filling stroke (16) to a pre-stroke (14).

5. An agricultural piston press according to one of the preceding claims **characterised in that** during the pre-stroke (14) of the gathering tines the stroke cylinder (46) of the retaining device (44) assumes its pressurised extension position (64) and the pressure chambers (63) of the stroke cylinder (31) of the gathering transmission (30) are alternately pressurised.

6. An agricultural piston press according to one of the preceding claims **characterised in that** during the filling stroke (16) of the gathering tines (13) the stroke cylinder (46) of the retaining device (44) performs a working movement and the stroke cylinder (31) of the gathering transmission (30) assumes an end position.

7. An agricultural piston press according to one of the preceding claims **characterised in that** the stroke cylinder (31) of the gathering transmission (30) and/or the stroke cylinder (46) of the retaining device (44) are pressurised at least during the respective working movement, preferably biased at 25 bars.

8. An agricultural piston press according to one of the preceding claims **characterised in that** at least the stroke cylinder (31) of the gathering transmission (30) is operated in the end position in a locking position.

9. An agricultural piston press according to one of the preceding claims **characterised in that** the telescopic transmission member (29) of the gathering transmission (30) is connected at one end by way of a gathering control crank (28) to the piston crank (25) of the pressing piston (3) and at the other end by way of a crank arm (34) to a control shaft (35) and the telescopic retaining device (44) is associated with the crank arm (34) and wherein the control shaft (35) non-rotatably mounts a control lever (36) which couples the gathering tines (13) carried by a gathering lever (38) by way of a coupling rod (37) to the movement of the telescopic transmission member (29) of the gathering transmission (30).

10. An agricultural piston press according to one of the preceding claims **characterised in that** the at least one telescopic transmission member (29) of the gathering transmission (30) and the at least one telescopic retaining device (44) are lockable.

11. An agricultural piston press according to claim 10 **characterised in that** locking is effected by actuation of a stop valve (59) and/or by biasing of the stroke cylinders (31, 46) forming the telescopic transmission member (29) of the gathering transmission (30) and the telescopic coupling member (45) of the retaining device (44), by means of a defined hydraulic pressure.

12. An agricultural piston press according to one of the preceding claims **characterised in that** the at least one stroke cylinder (31) of the gathering transmission (30) and the at least one stroke cylinder (46) of the retaining device (44) are controllable in dependence on operating parameters by means of a control and regulating device (55).

13. An agricultural piston press according to one of the preceding claims **characterised in that** the rotary speeds of the gathering crank (40) and the gathering control crank (28) are identical and form integral multiples of the rotary speed of the piston crank (25).

14. An agricultural piston press according to one of claims 1 to 12 **characterised in that** the rotary speeds of the gathering crank (40) and the gathering control crank (28) respectively form integral multiples of the rotary speed of the piston crank (25) relative to each other and in relation to the rotary speed of the piston crank (25).

15. An agricultural piston press according to one of the preceding claims **characterised in that** switching over between the pre-stroke (14) and the filling stroke (16) is effected in sensor-controlled mode, wherein a sensor (50-54) is arranged over the width of the feed passage (15) for detecting the crop material density.

16. An agricultural piston press according to one of the preceding claims **characterised in that** the sensor (50-54) senses different crop material densities in the feed passage (15) and enables or blocks the movement of the crop material (7) conveyed into the feed passage (15) relative to the bale pressing chamber (2) and wherein enablement or blocking is selectable by the definition of a threshold value (56) in the control and regulating device (55).

17. An agricultural piston press according to one of the preceding claims **characterised in that** the sensor (50-54) includes retaining elements (50) which project into the feed passage (15) and which are held by a pressurised stroke cylinder (54) in the feed passage (15) and wherein the biasing of the stroke cylinder (54), that defines the degree of compacting of the crop material (7) in the feed passage (15), can be predefined by way of the threshold value (51).

18. An agricultural piston press according to one of the preceding claims **characterised in that** the stroke cylinder (31) of the gathering transmission (30) is in the form of a synchronous cylinder and the stroke cylinders (46, 54) of the retaining device (44) and of the retaining elements (50) are in the form of plunger cylinders.

19. An agricultural piston press according to one of the preceding claims **characterised in that** the holding force of the plunger cylinder (46) of the retaining device (44) is such that it reliably holds the crank arm (34) of the gathering transmission (30) in an end position.

20. An agricultural piston press according to at least one of the preceding claims **characterised in that** the stroke cylinder (31) of the gathering transmission (30), the stroke cylinder (46) of the retaining device (44) and the stroke cylinder (54) of the retaining elements (55) are incorporated in a common hydraulic circuit (61) and wherein there is associated at least with the stroke cylinder (31) of the gathering transmission (30) a switching valve (57) for enabling and blocking said stroke cylinder (31) and the hydraulic circuit (61) is operated under a hydraulic biasing and there is associated with the stroke cylinder (54) of the retaining element (50) a control valve (62) for altering the holding force of said stroke cylinder (54).

21. An agricultural piston press according to claim 20 **characterised in that** the hydraulic biasing is 25 bars.

22. An agricultural piston press according to one of the preceding claims **characterised in that** a pressure limiting valve (66) is associated as an overload safety device at least with the telescopic transmission member (29) of the gathering transmission (30).

23. An agricultural piston press according to one of the preceding claims **characterised in that** the stroke cylinder (54) of the switching shaft (51) can be switched off and wherein the retaining elements (50) are passed out of the feed passage (15) and the gathering tines (13) alternatingly perform a pre-stroke (14) and a filling stroke (16).

## Revendications

1. Presse à piston agricole avec un piston de presse oscillant entraîné par un mécanisme à manivelle dans un canal de presse, un canal d'amenée avec des dents d'alimentation contrôlées par le bras de manivelle, une transmission de balleuse se trouvant entre le mécanisme à manivelle et les dents d'alimentation et ayant au moins un élément de transmission télescopique,
**caractérisée en ce que**, pour un changement sûr du trajet de déplacement des dents d'alimentation (13) pour passer d'une course d'avance (14) à une course complète (16), au moins un élément de transmission télescopique (29) induit le mouvement des dents d'alimentation (13) et dans laquelle un dispositif de retenue (44) est associé à la transmission (30) de la balleuse.

2. Presse à piston agricole selon la revendication 1, **caractérisée en ce que** le dispositif de retenue (44) présente au moins un élément d'accouplement télescopique (45).

3. Presse à piston agricole selon la revendication 1 ou 2, **caractérisée en ce que** l'élément d'accouplement télescopique (45) du dispositif de retenue (44) et l'élément de transmission télescopique (29) de la transmission (30) de la balleuse sont réalisés comme des vérins hydrauliques (31, 46).

4. Presse à piston agricole selon l'une quelconque des revendications précédentes, **caractérisée en ce que** le vérin hydraulique (46) du dispositif de retenue (44) et le vérin hydraulique (31) de la transmission (30) de la balleuse sont accouplés l'un à l'autre par un dispositif de contrôle et de régulation (55) de telle manière que le mouvement des dents d'alimentation (13) puisse passer d'une course complète (16) à une course d'avance (14).

5. Presse à piston agricole selon l'une quelconque des revendications précédentes, **caractérisée en ce que**, pendant la course d'avance (14) des dents d'alimentation, le vérin hydraulique (46) du dispositif de retenue (44) prend sa position étendue (64) sous pression et les chambres de pression (63) du vérin hydraulique (31) de la transmission (30) de la balleuse sont alternativement mises sous pression.

6. Presse à piston agricole selon l'une quelconque des revendications précédentes, **caractérisée en ce que**, pendant la course complète (16) des dents d'alimentation (13), le vérin hydraulique (46) du dispositif de retenue (44) exécute un cycle de fonctionnement et le vérin hydraulique (31) de la transmission (30) de la balleuse prend une position de fin de course.

7. Presse à piston agricole selon l'une quelconque des revendications précédentes, **caractérisée en ce que** le vérin hydraulique (31) de la transmission (30) de la balleuse et / ou le vérin hydraulique (46) du dispositif de retenue (44) sont mis sous pression au moins pendant le cycle de fonctionnement en question, sont de préférence pressurisés avec 25 bars.

8. Presse à piston agricole selon l'une quelconque des revendications précédentes, **caractérisée en ce qu'**au moins le vérin hydraulique (31) de la transmission (30) de la balleuse dans la position de fin de course est amené dans une position d'arrêt.

9. Presse à piston agricole selon l'une quelconque des revendications précédentes, **caractérisée en ce que** l'élément de transmission télescopique (29) de la transmission (30) de la balleuse est relié à une extrémité par une manivelle de commande de balleuse (28) à la manivelle de piston (25) du piston de presse (3) et à l'autre extrémité par une manivelle oscillante (34) à un arbre de commande (35) et le dispositif de retenue télescopique (44) est associé à la manivelle oscillante (34) et l'arbre de commande (35) reçoit de manière solidaire en rotation un levier de commande (36) qui accouple les dents d'alimentation (13) reçues par un levier (38) par une tige d'accouplement (37) au mouvement de l'élément de transmission télescopique (29) de la transmission (30) de la balleuse.

10. Presse à piston agricole selon l'une quelconque des revendications précédentes, **caractérisée en ce que** ledit au moins un élément de transmission télescopique (29) de la transmission (30) de la balleuse et ledit au moins un dispositif de retenue télescopique (44) peuvent être verrouillés.

11. Presse à piston agricole selon la revendication 10, **caractérisée en ce que** le verrouillage est effectué par actionnement d'une soupape d'arrêt (59) et / ou par pressurisation des vérins hydrauliques (31, 46) formant l'élément de transmission télescopique (29) de la transmission (30) de la balleuse et l'élément d'accouplement télescopique (45) du dispositif de retenue (44) au moyen d'une pression hydraulique définie.

12. Presse à piston agricole selon l'une quelconque des revendications précédentes, **caractérisée en ce que** ledit au moins un vérin hydraulique (31) de la transmission (30) de la balleuse et ledit au moins un vérin hydraulique (46) du dispositif de retenue (44) peuvent être commandés en fonction de paramètres de fonctionnement au moyen d'un dispositif de commande et de régulation (55)

13. Presse à piston agricole selon l'une quelconque des revendications précédentes, **caractérisée en ce que** les vitesses de rotation de la manivelle de balleuse (40) et de la manivelle de commande de balleuse (28) sont identiques et forment des multiples entiers de la vitesse de rotation de la manivelle de piston (25).

14. Presse à piston agricole selon l'une quelconque des revendications 1-12, **caractérisée en ce que** les vitesses de rotation de la manivelle de balleuse (40) et de la manivelle de commande de balleuse (28) forment respectivement l'une par rapport à l'autre et par rapport à la vitesse de rotation de la manivelle de piston (25) des multiples entiers de la vitesse de rotation de la manivelle de piston (25).

15. Presse à piston agricole selon l'une quelconque des revendications précédentes, **caractérisée en ce que** le passage entre la course d'avance (14) et la course complète (16) est piloté par capteur, un capteur (50-54) étant disposé sur la largeur du canal d'amenée (15) pour détecter la densité du produit récolté.

16. Presse à piston agricole selon l'une quelconque des revendications précédentes, **caractérisée en ce que** le capteur (50 - 54) détecter des densités différentes de produit récolté dans le canal d'amenée (15) et autorise ou bloque le mouvement du produit récolté (7) transporté dans le canal d'amenée (15) vers la chambre de presse de balle (2) et dans laquelle l'autorisation ou le blocage peut être choisi par définition d'une valeur seuil (56) dans le dispositif de commande et de régulation (55).

17. Presse à piston agricole selon l'une quelconque des revendications précédentes, **caractérisée en ce que** le capteur (50 - 54) comprend des éléments de retenue (50) faisant saillie dans le canal d'amenée (15) qui sont retenus dans le canal d'amenée (15) par un vérin hydraulique (54) mis sous pression et dans laquelle la pressurisation du vérin hydraulique (54) définissant le degré de compactage du produit récolté (7) dans le canal d'amenée (15) peut être prédéfinie par une valeur seuil (51).

18. Presse à piston agricole selon l'une quelconque des revendications précédentes, **caractérisée en ce que** le vérin hydraulique (31) de la transmission (30) de la balleuse est configuré comme un vérin de synchronisation et les vérins hydrauliques (46, 54) du dispositif de retenue (44) et des éléments de retenue (50) sont configurés comme des vérins plongeurs.

19. Presse à piston agricole selon l'une quelconque des revendications précédentes, **caractérisée en ce que** la force de retenue du vérin plongeur (46) du dispositif de retenue (44) est dimensionnée de telle manière qu'elle maintienne de manière fiable la manivelle oscillante (34) de la transmission (30) de la balleuse dans une position de fin de course.

20. Presse à piston agricole selon l'une quelconque des revendications précédentes, **caractérisée en ce que** le vérin hydraulique (31) de la transmission (30) de la balleuse et le vérin hydraulique (54) des éléments de retenue (55) sont intégrés dans un circuit hydraulique commun (61) et dans laquelle une valve de commande pour le déblocage et le blocage au moins du vérin hydraulique (31) est associée au cylindre hydraulique (31) de la transmission (30 de la balleuse et le circuit hydraulique (61) est activé sous pressurisation hydraulique et une soupape de commande (62) pour changer la force de retenue du vérin hydraulique (54) des éléments de retenue (50) est associée à ce vérin hydraulique (54).

21. Presse à piston agricole selon la revendication 20,
**caractérisée en ce que** la pressurisation hydraulique est de 25 bar.

22. Presse à piston agricole selon l'une quelconque des revendications précédentes, **caractérisée en ce qu'**une soupape de limitation de pression (66) est associée comme protection contre la surcharge au moins à l'élément de transmission télescopique (29) de la transmission (30) de la balleuse.

23. Presse à piston agricole selon l'une quelconque des revendications précédentes, **caractérisée en ce que** le vérin hydraulique (54) de l'arbre de commande (51) peut être désactivé et dans laquelle les éléments de retenue (50) sont guidés hors du canal d'amenée (15) et les dents d'alimentation (13) exécutent alternativement une course d'avance (14) et une course complète (16).
